# EUROPÄISCHE PATENTSCHRIFT

(11) **EP 3 668 774 B1**
(45) Veröffentlichungstag und Bekanntmachung des Hinweises auf die Patenterteilung: **09.06.2021**
(21) Anmeldenummer: 18756175.8
(22) Anmeldetag: 10.08.2018
(51) Int. Cl.: B60K 35/00, B62D 1/181, B62D 1/183, B62D 1/18

(54) **KRAFTFAHRZEUG**
MOTOR VEHICLE
VÉHICULE AUTOMOBILE

(30) Priorität: 17.08.2017 DE 102017007841
(43) Veröffentlichungstag der Anmeldung: 24.06.2020
(73) Patentinhaber: KOSTAL Automobil Elektrik GmbH & Co. KG, 58513 Lüdenscheid (DE)
(72) Erfinder: HIRSCHFELD, Klaus, 58515 Lüdenscheid (DE); MOLDENHAUER, Knut, 58097 Hagen (DE); FLÖPER, Peter, 58540 Meinerzhagen (DE); FELDMÜLLER, Ludwig, 58239 Schwerte (DE); DEITMERG, Martin, 58507 Lüdenscheid (DE)
(74) Vertreter: Kerkmann, Detlef
(86) Internationale Anmeldenummer: PCT/EP2018/071743
(87) Internationale Veröffentlichungsnummer: WO 2019/034553

(56) Entgegenhaltungen:
- DE-A1- 10 204 596
- DE-A1-102005 032 706
- US-A1- 2014 277 896
- CARJAM TV: "Volkswagen ID Self Driving Electric Car 2017 New VW Autonomous Electric Car Concept Paris CARJAM", Youtube, 29. September 2016 (2016-09-29), Seite 1 pp., XP054978903, Gefunden im Internet: URL:https://www.youtube.com/watch?v=wPWg69 H3K9g [gefunden am 2018-11-26]

## Beschreibung

Die Erfindung betrifft ein Kraftfahrzeug, welches zumindest eine manuelle und eine automatische Fahrbetriebsart aufweist, wobei das Kraftfahrzeug ein Lenkrad und eine durch eine Aktuatorik längsverstellbare Lenksäule aufweist, wobei die Aktuatorik in der automatischen Fahrbetriebsart das Lenkrad dicht an das Armaturenbrett des Fahrzeugs heranzieht, und wobei hinter dem Lenkrad ein Bildschirm angeordnet ist, der in der automatischen Fahrbetriebsart am Lenkrad anliegt.

Ein derartiges Kraftfahrzeug ist aus der Druckschrift US 2014/0277896 A1 bekannt.

Durch Konzeptstudien für Elektrofahrzeuge sind Entwürfe bekannt (https://ecomento.tv/2017/03/03/so-faehrt-sich-vws-elektroauto-studie-i-d-videos/), bei denen ein Elektrofahrzeug in einem manuellen und in einem autonomen Fahrmodus betreibbar ist. Im autonomen Fahrmodus ist das Lenkrad dicht an das Armaturenbrett angelegt beziehungsweise in eine passend geformte Ausnehmung des Armaturenbretts versenkt. Bei einem derart positionierten Lenkrad ist ein am Armaturenbrett angeordneter Bildschirm durch den Freiraum innerhalb des Lenkradkranzes weiterhin erkennbar.

Derartige Konzepte unterscheiden sich in ihrem Design deutlich von gegenwärtig gängigen Ausgestaltungen. So ist es bei heutigen Kraftfahrzeuge üblich, an der Lenksäule Schaltereinheiten, und zwar insbesondere Hebelschalter zur Blinkgeber- und Scheibenwischersteuerung vorzusehen. Auch mehr oder weniger große Anzeigeelemente und Displays werden im Bereich des Lenkrads an der Lenksäule als sogenannte Lenksäulenmodule montiert.

Bei dem eingangs genannten Stand der Technik ist ein derartiges Lenksäulenmodul nicht dargestellt. Ein Bildschirm als Anzeigeelement ist hier zwar vorgesehen, jedoch ist dieser am Armaturenbrett angeordnet. Eine Anordnung von Bedienschaltern oder Schalthebeln an der Lenksäule geht aus diesem Dokument gar nicht hervor.

Bei der Verwendung eines Lenksäulenmoduls ergäben sich hier zudem zwei Schwierigkeiten. Erstens wären die Bedienelemente vor dem Bildschirm angeordnet und würden den freien Blick auf den Bildschirm mehr oder weniger einschränken. Zweitens wären im autonomen Fahrmodus die von der Lenksäule abragenden Bedienelemente einem dichten Anlegen des Lenkrads an den Bildschirm im Wege.

Es stellte sich die Aufgabe, ein Kraftfahrzeug zu schaffen, welches bei verschiedenen Fahrbetriebsarten des Kraftfahrzeugs jeweils vorteilhafte Lenkradpositionierungen und, zumindest für eine manuelle Fahrbetriebsart, an der Lenksäule angeordnete Bedienelemente zur Verfügung stellt.

Diese Aufgabe wird erfindungsgemäß dadurch gelöst, dass der Bildschirm eine Komponente eines an der Lenksäule angeordneten Lenksäulenmoduls ist.

Die Idee, den Bildschirm hier als Komponente eines Lenksäulenmoduls an der Lenksäule anzuordnen, schafft die Möglichkeit einen Bildschirm hinter dem Lenkrad anzuordnen, ohne dass das Lenksäulenmodul den Bildschirm am Armaturenbrett teilweise oder ganz verdeckt. Der Bildschirm bleibt somit durch den Freiraum innerhalb des Lenkradkranzes immer unverdeckt erkennbar. Darüber hinaus wird es möglich, seitlich am Lenksäulenmodul Schaltelemente vorzusehen, wie etwa Drucktaster oder auch Hebelschalter zur Blinkgeber- und Scheibenwischersteuerung, ohne dass diese den Blick auf die Anzeigen des Bildschirms beeinträchtigen.

Die Anordnung des Bildschirms unmittelbar hinter dem Lenkrad schafft darüber hinaus die Möglichkeit, diesen optional als einen Touchscreen auszubilden, so dass der Bildschirm selber als Bedien- und Schaltelement verwendet werden kann. Hierdurch lassen sich variable und damit sehr vielfältige Bedienmöglichkeiten direkt in der Nähe des Lenkrads anordnen.

Besonders vorteilhaft ist, dass diese Ausgestaltungen nicht die Möglichkeit beeinträchtigen, das Lenkrad für verschiedene Fahrbetriebsarten des Kraftfahrzeugs unterschiedlich zu positionieren.

Die Erfindung geht von der Annahme aus, dass das Kraftfahrzeug zumindest eine manuelle und eine automatische Fahrbetriebsart aufweist. Die manuelle Fahrbetriebsart sieht vor, dass der primäre Benutzer (also der Benutzer an der Fahrerposition) das Kraftfahrzeug auf konventionelle Weise bedient und durch Drehbetätigungen des Lenkrads steuert. Das Kraftfahrzeug stellt dabei lediglich unterstützende Funktionen zur Verfügung.

Die automatische Fahrbetriebsart ermöglicht dagegen einen autonomen Betrieb des Kraftfahrzeugs, der ohne Eingreifen des Benutzers auskommt. Darüber hinaus kann auch eine halbautomatische Fahrbetriebsart vorgesehen sein, die zwar grundsätzlich einen automatischen Betrieb des Kraftfahrzeugs ermöglicht, der aber jederzeit durch ein Eingreifen des primären Benutzers, etwas durch eine Bewegung des Lenkrads, übersteuert werden kann.

Für die verschiedenen Fahrbetriebsarten ist es vorteilhaft, dass Lenkrad jeweils unterschiedlich zum primären Benutzer zu positionieren, um etwa in der automatischen oder halbautomatischen Fahrbetriebsart zusätzlichen freien Platz und damit einen größeren Komfort im Innenraum des Kraftfahrzeugs zu schaffen. Dieses wird durch eine Lenksäule ermöglicht, deren in den Innenraum des Kraftfahrzeugs hineinragender Längenanteil durch eine Aktuatorik verstellbar ist und die hier etwas vereinfachend kurz als "längsverstellbar" bezeichnet wird.

In der manuellen Fahrbetriebsart ist die Lenksäule aus dem Armaturenbrett mehr oder weniger vollständig ausgefahren, damit es sich das Lenkrad in einer für den Benutzer ergonomisch günstigen Position befindet. Das Lenkrad, die Hebelschalter sowie gegebenenfalls weitere Schalter am Rand des Lenksäulenmoduls können so auf bequeme Weise händisch betätigt werden. In der halbautomatischen Fahrbetriebsart ist die Lenksäule ein Stück weit in das Armaturenbrett eingefahren, so dass das Lenkrad und die Schaltelemente des Lenksäulenmoduls zwar "aus dem Weg" sind, aber für den Bedarfsfall jederzeit erreichbar bleiben.

In der automatischen Fahrbetriebsart wird das Lenkrad nahe an das Armaturenbrett gebracht und liegt zudem am Lenksäulenmodul an. Der als Komponente des Lenksäulenmoduls ausgebildete Bildschirm liegt dabei entweder an der Rückseite des Lenkrads an oder taucht sogar in den Freiraum des Lenkradkranzes ein. Vorzugsweise ist das Lenksäulenmodul vollständig und das Lenkrad zumindest teilweise in einer Ausnehmung des Armaturenbretts versenkt. Die am Rand des Lenksäulenmoduls gegebenenfalls angeordneten Druck- und Hebelschalter und werden dabei durch das Lenkrad und die Ränder der Ausnehmung des Armaturenbretts verdeckt.

Im Folgenden soll ein Ausführungsbeispiel der Erfindung anhand der Zeichnung dargestellt und näher erläutert werden. In allen Figuren dargestellt ist jeweils eine Bedienanordnung mit einem Lenkrad, einem Lenksäulenmodul und einer Lenksäule. Manche Figuren zeigen zudem einen Ausschnitt aus dem Armaturenbrett eines Kraftfahrzeugs, an dem die Bedienanordnung angeordnet ist. Dabei zeigen die
- Figuren 1 bis 3: die Bedienanordnung in einer Position für manuelles Fahren,
- Figuren 4 bis 6: die Bedienanordnung in einer Position für halbautomatisches Fahren,
- Figuren 7 bis 9: die Bedienanordnung in einer Position für automatisches Fahren.

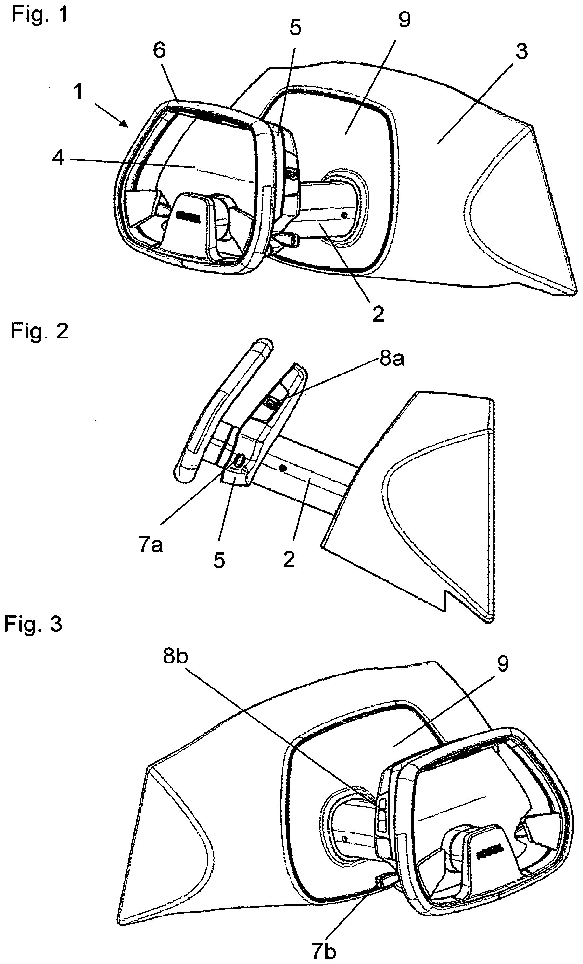

Die Figur 1 zeigt einen Ausschnitt aus dem Armaturenbrett 3 eines Kraftfahrzeugs, an dem eine Lenksäule 2 angeordnet ist. Die Lenksäule 2 ist durch eine nichtdargestellte Lenksäulenaktuatorik in das Armaturenbrett 3 einziehbar beziehungsweise ausfahrbar, so dass der in den Innenraum des Kraftfahrzeugs hineinragende Teil der Lenksäule 2 in seiner Länge verstellbar ist. Hierdurch kann das am Ende der Lenksäule 2 angeordnete Lenkrad 1 verschiedene Positionen relativ zum Armaturenbrett 3 einnehmen.

Drei beispielhafte Positionen des Lenkrads 1 sind in den Figuren 1, 4 und 7 dargestellt. Diese Positionen werden durch die Lenksäulenaktuatorik in Abhängigkeit von der aktuell aktiven Fahrbetriebsart automatisch eingestellt.

Es sein im Folgenden angenommen, dass das Kraftfahrzeug entsprechend einer entsprechenden Ausgestaltung der Fahrzeugsteuerung drei unterschiedliche Fahrbetriebsarten einnehmen kann, die als manuelle, halbautomatische und automatische Fahrbetriebsart bezeichnet werden sollen.

Die manuelle Fahrbetriebsart entspricht dabei der konventionellen Fahrzeugsteuerung durch einen Benutzer, der das Kraftfahrzeug durch Drehbetätigungen des Lenkrads steuert, und der daher im üblichen Sinne des Wortes als Fahrer des Kraftfahrzeugs bezeichnet werden kann. In dieser Fahrbetriebsart ist die Lenksäule 2 relativ weit aus dem Armaturenbrett 3 ausgefahren, so dass sich das Lenkrad 1 in einer für den Fahrer günstigen Betätigungsposition befindet. Diese Position des Lenkrads 1 ist in den Figuren 1, 2 und 3 aus verschiedenen Perspektiven dargestellt.

In geringem Abstand hinter dem Lenkrad 1 ist an der Lenksäule 2 ein Lenksäulenmodul 5 angeordnet, zu dem hier als ein relativ großflächiges Anzeigeelement ein Bildschirm 4 gehört. Durch einen kurzen Abstand zum Lenkrad 1 befindet sich der Bildschirm 4 in einer für den Fahrer gut erreichbaren Position, so dass er vorteilhaft auch als Touch-Screen ausgebildet sein kann.

Das Lenksäulenmodul 5, dessen Frontfläche der Bildschirm 4 bildet, weist hier zudem mehrere seitlich angeordnete Schaltereinheiten 7a, 7b, 8a, 8b auf, die in diesem Ausführungsbeispiel sowohl als Druckschalter 8a, 8b als auch als Hebelschalter 7a, 7b ausgeführt sind. Die Hebelschalter 7a, 7b können insbesondere die üblicherweise im Bereich der Lenksäule 2 angeordneten Blinkgeber- und Scheibenwischerschalter ausbilden.

Die Seitenansicht der Figur 2 verdeutlicht, dass das Lenksäulenmodul 5 in einem Abstand von wenigen Zentimetern annähernd parallel hinter dem Lenkrad 1 angeordnet ist, so dass die Schaltereinheiten 7a, 7b, 8a, 8b von den Handpositionen am Lenkrad 1 aus gut erreichbar sind.

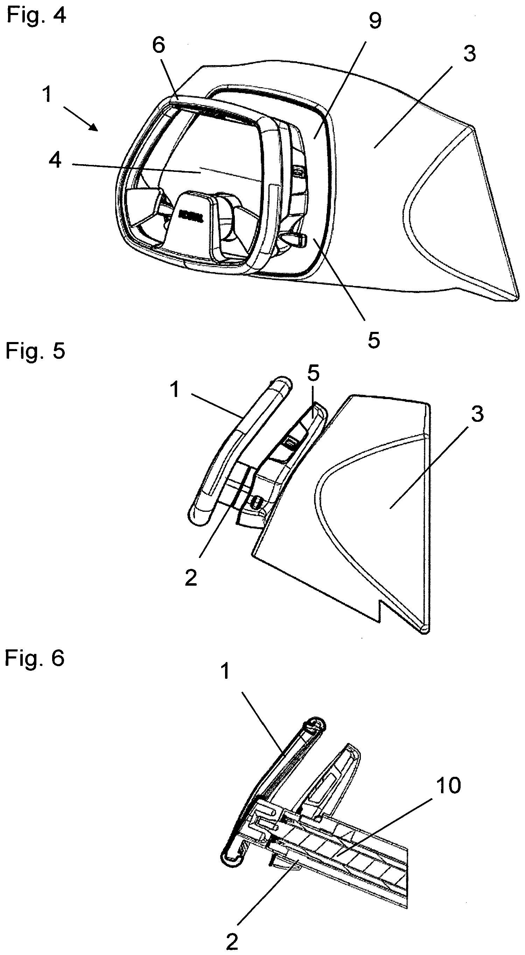

Die Figuren 4 bis 6 zeigen die gleichen Bedienelemente in der halbautomatischen Fahrbetriebsart des Kraftfahrzeugs. Diese Fahrbetriebsart ist dadurch charakterisiert, dass der primäre Benutzer des Kraftfahrzeugs das Fahrzeug nicht unmittelbar lenkt, sondern lediglich die automatisch erfolgende Steuerung des Kraftfahrzeugs überwacht. Die Hände des Benutzers liegen dabei normalerweise nicht am Lenkrad 1 an und betätigen auch normalerweise nicht die Schaltereinheiten 7a, 7b, 8a, 8b des Lenksäulenmoduls 5. Der primäre Benutzer kann aber jederzeit auf das Lenkrad 1 und die Schaltereinheiten 7a, 7b, 8a, 8b zugreifen und durch eine Betätigung die automatische Steuerung des Kraftfahrzeugs übersteuern.

Von dieser Möglichkeit wird aber üblicherweise nur in Ausnahmesituationen Gebrauch gemacht wird; andernfalls wäre die Verwendung der manuellen Fahrbetriebsart zweckmäßiger. Daher kann für den halbautomatischen Fahrbetrieb vorteilhaft vorgesehen werden, das Lenkrad und das Lenksäulenmodul aus der ergonomisch günstigsten Position zu entfernen, um dadurch den Freiraum im Innenraum des Kraftfahrzeugs zu vergrößern.

Wie der Vergleich der Figuren 1 und 4 zeigt, ist bei der halbautomatischen Fahrbetriebsart der Abstand von Lenkrad 1 und Lenksäulenmodul 5 zum Armaturenbrett 3 deutlich verkleinert, was dadurch erreicht wird, dass die Lenksäulenaktuatorik die Lenksäule 2 relativ weit in das Armaturenbrett 3 einzieht. Der Vergleich der Figuren 2 und 5 verdeutlicht, dass sich der Abstand zwischen Lenkrad 1 und Lenksäulenmodul 5 dabei nicht verändert.

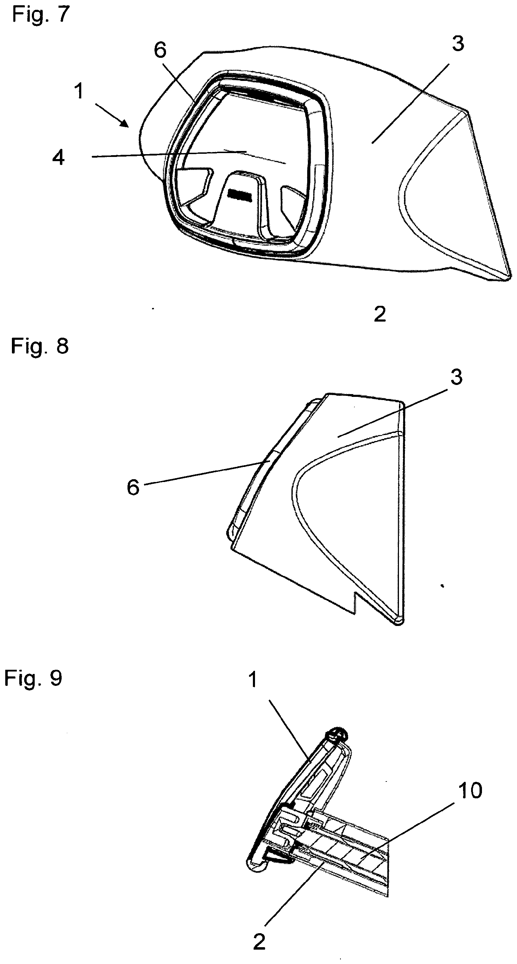

Im vollautomatischen Betrieb ist ein betätigender Zugriff des Benutzers weder auf das Lenkrad 1 noch auf das Lenksäulenmodul 5 erforderlich und daher auch nicht vorgesehen. Das Lenkrad 1 und das Lenksäulenmodul 5 können daher vollständig aus dem Zugriffsbereich des primären Benutzers entfernt werden. Die Figuren 7 und 8 zeigen, dass die Lenksäule 2 nun soweit in das Armaturenbrett 3 eingezogen ist, dass das Lenksäulenmodul 5 dicht am Armaturenbrett 3 anliegt.

Besonders deutlich in der Figur 2 und darüber hinaus in den Schnittansichten der Figuren 6 und 9 ist erkennbar, dass das Lenksäulenmodul 5 direkt mit der Lenksäule 2 verbunden ist. Das Lenkrad 1 ist dagegen an das Ende einer innerhalb der Lenksäule 2 drehbar gelagerten Lenkwelle 10 gekoppelt. Die Lenkwelle 10 kann zudem axial gegen die Lenksäule 2 verschoben werden, wodurch, wie die Figuren 6 und 9 verdeutlichen, der Abstand zwischen dem Lenksäulenmodul 5 und dem Lenkrad 1 verändert werden kann.

In der automatischen Fahrbetriebsart ist dieser Abstand nun soweit verkürzt, dass Lenksäulenmodul 5 an der Rückseite des Lenkrads 1 anliegt. Dabei liegt der Bildschirm 4 an der Rückseite des Lenkradkranzes 6 an oder taucht sogar in den vom Lenkradkranz 6 umschlossenen Zwischenraum ein.

Gemäß der Figuren 7 und 8 ist das Lenksäulenmodul 5 in der automatischen Fahrbetriebsart vollständig und das Lenkrad 1 zumindest teilweise in einer Ausnehmung 9 des Armaturenbretts 3 versenkt angeordnet. Die Darstellungen des Bildschirms 4 sind in dieser Position des Lenksäulenmoduls 5 durch den Freiraum des Lenkradkranzes 6 hindurch weiterhin gut erkennbar. Die muldenartige Ausnehmung 9 innerhalb des Armaturenbretts 3 ist in den Figuren 1, 3 und 4 dargestellt.

Beim Einleiten der automatischen Fahrbetriebsart kann zudem vorteilhaft vorgesehen sein, gegebenenfalls weit vom Lenksäulenmodul 5 abstehende Schalthebel der Hebelschalter 7a, 7b aktuatorisch in das Lenksäulenmodul 5 einzuziehen oder an dieses anzuklappen.

### Bezugszeichen

- 1: Lenkrad
- 2: Lenksäule
- 3: Armaturenbrett
- 4: Bildschirm
- 5: Lenksäulenmodul
- 6: Lenkradkranz
- 7a, 7b, 8a, 8b: Schaltereinheiten
- 7a, 7b: Hebelschalter
- 8a, 8b: Druckschalter
- 9: Ausnehmung (im Armaturenbrett)
- 10: Lenkwelle

## Patentansprüche

1. Kraftfahrzeug,
welches zumindest eine manuelle und eine automatische Fahrbetriebsart aufweist,
wobei das Kraftfahrzeug ein Lenkrad (1) und eine durch eine Aktuatorik längsverstellbare Lenksäule (2) aufweist,
wobei die Aktuatorik in der automatischen Fahrbetriebsart das Lenkrad (1) dicht an das Armaturenbrett des Fahrzeugs heranzieht, und
wobei hinter dem Lenkrad (1) ein Bildschirm (4) angeordnet ist, der in der automatischen Fahrbetriebsart am Lenkrad (1) anliegt,
**dadurch gekennzeichnet,**
**dass** der Bildschirm (4) eine Komponente eines an der Lenksäule (2) angeordneten Lenksäulenmoduls (5) ist.

2. Kraftfahrzeug nach Anspruch 1, **dadurch gekennzeichnet, dass** in der automatischen Fahrbetriebsart der Bildschirm (4) in einen Freiraum innerhalb des Lenkradkranzes (6) eintaucht.

3. Kraftfahrzeug nach Anspruch 1, **dadurch gekennzeichnet, dass** das Lenksäulenmodul (5) mindestens eine Schaltereinheit (7a, 7b, 8a, 8b) aufweist.

4. Kraftfahrzeug nach Anspruch 3, **dadurch gekennzeichnet, dass** mindestens eine Schaltereinheit (7a, 7b) als Hebelschalter ausgebildet ist.

5. Kraftfahrzeug nach Anspruch 3, **dadurch gekennzeichnet, dass** mindestens eine Schaltereinheit (8a, 8b) als Druckschalter ausgebildet ist.

6. Kraftfahrzeug nach Anspruch 3 und 4, **dadurch gekennzeichnet, dass** in der automatischen Fahrbetriebsart die am Lenksäulenmodul (5) angeordneten Schaltereinheiten (7a, 7b, 8a, 8b) durch das Lenkrad (1) und/oder den Bildschirm (4) und/oder durch Teile des Armaturenbretts (3) verdeckt sind.

7. Kraftfahrzeug nach Anspruch 1, **dadurch gekennzeichnet, dass** in der automatischen Fahrbetriebsart das Lenksäulenmodul (5) vollständig und das Lenkrad (1) zumindest teilweise in einer Ausnehmung (9) des Armaturenbretts (3) versenkt angeordnet sind.

8. Kraftfahrzeug nach Anspruch 1, **dadurch gekennzeichnet, dass** das Kraftfahrzeug zusätzlich eine halbautomatische Fahrbetriebsart aufweist, in der die Lenksäule (5) nur teilweise in das Armaturenbrett (3) eingezogen ist.

## Claims

1. Motor vehicle, which has at least one manual and one automatic driving mode, wherein the motor vehicle has a steering wheel (1) and a steering column (2) which is longitudinally adjustable by means of an actuator system, wherein the actuator in the automatic driving mode pulls the steering wheel (1) close to the dashboard of the vehicle, and a screen (4) being arranged behind the steering wheel (1), which is in contact with the steering wheel (1) in the automatic driving mode, characterized, that the screen (4) is a component of a steering column module (5) arranged on the steering column (2).

2. Motor vehicle according to claim 1, **characterized in that** in the automatic driving mode the screen (4) is immersed in a free space within the steering wheel rim (6).

3. Motor vehicle according to claim 1, **characterized in that** the steering column module (5) has at least one switch unit (7a, 7b, 8a, 8b).

4. Motor vehicle according to claim 3, **characterized in that** at least one switch unit (7a, 7b) is designed as a lever switch.

5. Motor vehicle according to Claim 3, **characterized in that** at least one switch unit (8a, 8b) is designed as a pressure switch.

6. Motor vehicle according to claim 3 and 4, **characterized in that** in the automatic driving mode the switch units (7a, 7b, 8a, 8b) arranged on the steering column module (5) through the steering wheel (1) and / or the screen (4) and / or are covered by parts of the dashboard (3).

7. Motor vehicle according to claim 1, **characterized in that** in the automatic driving mode the steering column module (5) is arranged completely and the steering wheel (1) is at least partially sunk in a recess (9) of the dashboard (3).

8. Motor vehicle according to claim 1, withstand that the motor vehicle belongs to a semi-automatic driving mode in which the steering column (5) is only drawn into the dashboard (3).

## Revendications

1. Véhicule à moteur, qui a au moins un mode de conduite manuel et un mode de conduite automatique, dans lequel le véhicule automobile a un volant (1) et une colonne de direction (2) qui est réglable longitudinalement par un système d'actionneur, dans lequel l'actionneur dans le mode de conduite automatique tire le volant (1) près du tableau de bord du véhicule, et un écran (4) étant disposé derrière le volant (1), qui est en contact avec le volant (1) en mode de conduite automatique, **caractérisé, en ce que** l'écran (4) est un composant d'un module de colonne de direction (5) disposé sur la colonne de direction (2).

2. Véhicule automobile selon la revendication 1, **caractérisé en ce que** dans le mode de conduite automatique l'écran (4) est immergé dans un espace libre à l'intérieur de la jante de volant (6).

3. Véhicule automobile selon la revendication 1, **caractérisé en ce que** le module de colonne de direction (5) comporte au moins une unité de commutation (7a, 7b, 8a, 8b).

4. Véhicule automobile selon la revendication 3, **caractérisé en ce qu'**au moins un bloc interrupteur (7a, 7b) est réalisé sous la forme d'un interrupteur à levier.

5. Véhicule automobile selon la revendication 3, **caractérisé en ce qu'**au moins un bloc interrupteur (8a, 8b) est réalisé sous forme de pressostat.

6. Véhicule automobile selon la revendication 3 et 4, **caractérisé en ce que** dans le mode de conduite automatique les unités de commutation (7a, 7b, 8a, 8b) disposées sur le module de colonne de direction (5) à travers le volant (1) et / ou l'écran (4) et / ou sont recouverts par des parties du tableau de bord (3).

7. Véhicule automobile selon la revendication 1, **caractérisé en ce que** dans le mode de conduite automatique le module de colonne de direction (5) est agencé complètement et le volant (1) est au moins partiellement enfoncé dans un évidement (9) de la planche de bord (3)).

8. Véhicule automobile selon la revendication 1, **caractérisé en ce que** le véhicule automobile dispose en outre d'un mode de conduite semi-automatique dans lequel la colonne de direction (5) n'est que partiellement rétractée dans le tableau de bord (3).
